# EUROPÄISCHE PATENTSCHRIFT

(11) **EP 0 473 893 B1**
(45) Veröffentlichungstag und Bekanntmachung des Hinweises auf die Patenterteilung: **10.08.1994**
(21) Anmeldenummer: 91110539.3
(22) Anmeldetag: 26.06.1991
(51) Int. Cl.: A01D 34/13, A01D 34/17, A01D 34/18

(54) **Schneidwerk für landwirtschaftliche Mähmaschine**
Cutting device for agricultural mower
Dispositif de coupe pour faucheuse agricole

(30) Priorität: 07.09.1990 DD 343889
(43) Veröffentlichungstag der Anmeldung: 11.03.1992
(73) Patentinhaber: Fortschritt Erntemaschinen GmbH, D-01841 Neustadt (DE)
(72) Erfinder: Hille, Manfred, O-8351 Berthelsdorf (DE); Haftmann, Dieter, O-8355 Neustadt (DE); Gruhnert, Sybille, O-8360 Sebnitz (DE); Richter, Werner, O-8355 Neustadt (DE)
(74) Vertreter: Müller, Lutz

(56) Entgegenhaltungen:
- DE-A- 1 507 170
- DE-A- 2 948 634
- FR-A- 2 173 256
- US-A- 3 151 434
- US-A- 3 401 513
- US-A- 4 380 889

## Beschreibung

### Anwendungsgebiet der Erfindung

Die Erfindung betrifft ein Schneidwerk mit flachen, ebenen Mulchfingern, einem hin- und hergehenden Mähmesser mit Messerklingen und einem federnden Messerandrücker für landwirtschaftliche Mähmaschinen, insbesondere für die Ernte von Feldfutter und Gras.

### Charakteristik des bekannten Standes der Technik

Es sind Schneidwerke insbesondere zur Ernte von Grünfutter bekannt, bei denen sogenannte Mulchfinger zum Einsatz kommen. Charakterisiert sind diese Schneidwerke dadurch, daß sich die Mulchfinger im wesentlichen nur unterhalb des hin- und hergehenden Mähmessers erstrecken.

In der DE-A- 15 07 170 ist unter anderem beschrieben, daß ebene flache Finger zur Anwendung kommen, wobei die Messerklingen die Finger um einen kleinen Betrag überragen und an einem obenliegenden Messerrücken befestigt sind. Die Finger besitzen dabei eine etwa doppelte bis dreifache Dicke gegenüber den Messerklingen. Der Messerrücken liegt am Mähbalken an und die Messerklingen werden im hinteren Bereich durch federnde Messerandrücker geführt. Dieser Aufbau wirkt sich jedoch negativ auf die Betriebssicherheit des Schneidwerkes aus, da es leicht zu Unterfütterungen zwischen Finger und Messerklinge kommt.
Gleiches kann von ähnlichen Schneidwerkstypen, wie z.B. in der US-A- 4 380 889 beschrieben, festgestellt werden. Hier werden anstelle der Finger Messerklingen am Mähbalken befestigt. Messerklingen als Finger sind jedoch für den Einsatz als Mulchfinger in vielen Fällen durch ihre geringe Dicke und hohe Härte nicht geeignet.

Nach der US-A- 3 151 434 ist ein weiteres Mähwerk für die Grünfutterernte bekannt, wo geschmiedete Finger eingesetzt werden, die eine hohe Standfestigkeit besitzen. Ein U-förmiger Messerandrücker reicht mit seinen in der Fingerteilung liegenden Zungen bis annähernd an die Spitzen der Messerklingen, welche an einem untenliegenden, in einer Aussparung der Finger laufenden Messerrücken befestigt sind. Dieses Schneidwerk ist aber sehr aufwendig in seiner Herstellung, da neben dem komplizierten Finger weitere komplizierte Führungsteile notwendig sind.

### Ziel der Erfindung

Ziel der Erfindung ist es, ein Schneidwerk für landwirtschaftliche Mähmaschinen mit Mulchfingern und Mähmesser für die Ernte von Grünfutter zu schaffen, welches bei einer hohen Betriebssicherheit einen geringen Herstellungsaufwand besitzt.

### Darlegung des Wesens der Erfindung

Der Erfindung liegt die Aufgabe zugrunde, ein Schneidwerk für landwirtschaftliche Mähmaschinen mit flachen, ebenen Mulchfingern, die von unten an einem Mähbalken befestigt sind, einem hin- und hergehenden Mähmesser, welches an einem obenliegenden Messerrücken Messerklingen besitzt, wobei die Messerklingen vorn über die Mulchfinger überstehen und der Messerrücken an der Stirnseite des Mähbalkens anliegt, und einem federnden, am Mähbalken befestigten und über den Messerrücken geführten Messerandrücker zu schaffen, welches mit wenigen und einfachen Teilen ein Unterfüttern der Messerklingen und somit eine Verschlechterung der Schneideigenschaften verhindert.

Erfindungsgemäß wird dies erreicht, indem bei einem eingangs angeführten Schneidwerk die Mulchfinger als Doppelfinger mit einem Verbindungssteg zwischen beiden Fingerteilen ausgebildet sind, wobei die Vorderkante des Verbindungssteges die hintere Begrenzung des Schnittbereiches der Fingerteile bildet. Die Messerandrücker sind doppelfingerförmig ausgebildet, wobei die Zungen mit der gleichen Teilung wie die Doppelfinger symmetrisch über den Fingerteilen liegen und bis annähernd an deren Spitzen reichen. Die Doppelfinger und die Messerandrücker sind um die Teilung versetzt zueinander angeordnet, so daß die Stege vom Doppelfinger und Messerandrücker abwechselnd unter und über dem Mähmesser liegen. Letztlich liegen die Messerandrücker mit den Spitzen der Zungen oder dem vorderen Zungenbereich am Mähmesser bzw. den Messerklingen an. Die Zungen der Messerandrücker sind gegenüber den Fingerteilen geringfügig schmaler.

Bei der erfindungsgemäßen Lösung wird das Mähmesser, welches über seine gesamte Klingenlänge auf den Mulchfingern aufliegt, nahe der Messerklingenspitzen auf die Mulchfinger gedrückt. Damit wird weitestgehend ein Unterfüttern zwischen Messerklinge und Mulchfinger verhindert. Durch den Verbindungssteg des Doppelfingers wird gleichzeitig eine ständige Führung des Mähmessers gewährleistet. In der zweiten Ebene wird das Mähmesser einerseits über die Messerklingenhinterkante und die Messerrückenhinterkante an der Stirnseite des Mähbalkens geführt. In der Gegenrichtung erfolgt die Führung des Mähmessers durch die Messerandrücker. Die Stege der Doppelfinger und der Messerandrücker sind so gelegt, daß der Stoß der Schneiden benachbarter Messerklingen hinter den Vorderkanten der Stege liegt und damit durch den Versatz von Doppelfinger und Messerandrücker stets eine Haltekante gebildet wird. Durch das geringfügige Zurücksetzen der Zungen gegenüber den Schneidkanten der Fingerteile wird ein Doppelschnitt des Erntegutes verhindert.

Erfindungsgemäß ist es zweckmäßig, daß hierzu der Verbindungssteg des Doppelfingers und die Spitzen der Fingerteile an ihren in Arbeitsrichtung gelegenen Stirnseiten in einem spitzen Winkel, insbesondere einem Winkel von ca. 30°, nach unten hinten abgeflacht sind.

Weiterhin ist es zweckmäßig, daß der Messerandrücker von seiner Befestigungsstelle am Mähbalken in bekannter Weise bogenförmig über den Messerrücken geführt ist, so daß zwischen Messerandrücker und Messerrücken ein Freiraum entsteht, vor dem Messerrücken in einem spitzen Winkel zu den Messerklingen verläuft und in Höhe der Messerklingen die Zungen beginnen, wobei die Vorderkante eines Steges zwischen den Zungen spitzwinklig zu der Ebene der Unterseite der Zungen endet.
Zur Erzielung eines gleichmäßig guten Halte- bzw. Schneideffektes ist es ferner zweckmäßig, daß die Spitzen der Fingerteile und der Zungen sowie die Vorderkanten der Stege des Doppelfingers und des Messerandrückers in jeweils gleicher Entfernung von der Spitze der Messerklinge angeordnet sind. Der Verbindungssteg des Doppelfingers soll so angeordnet sein, daß er unter dem hinteren Teil der Messerklingen liegt.
Eine weitere zweckmäßige Ausführung der Erfindung beinhaltet, daß der Mähbalken entlang seiner Stirnseiten Härtezonen besitzt. Dadurch wird einmal eine langlebige Führung des Mähmessers an der forderen Stirnseite gewährleistet, zum anderen wird ein Verzug des Mähbalkens verhindert. Ebenfalls sinnvoll ist es, den Doppelfinger als Blechstanzteil auszuführen.
Letztlich ist es erfindungsgemäß zweckmäßig, daß im Mähbalken nahe und parallel zur vorderen Stirnseite Befestigungsbohrungen für die Doppelfinger vorzugsweise im Abstand der Fingerteilung vorhanden sind, wobei die Doppelfinger entsprechende Durchgangsbohrungen besitzen. Nahe der hinteren Stirnseite des Mähbalkens ist mittig zu den Befestigungsbohrungen zweier benachbarter Doppelfinger je eine Bohrung angeordnet, wobei mittels Schraubverbindungen durch diese Bohrungen der Mähbalken mit einem Gestell des Schneidwerkes und mit einem Trogblech sowie mit dem Messerandrükker verbunden ist. Vor jeder Bohrung ist im vorderen Bereich des Mähbalkens eine Gewindebohrung vorgesehen, in der eine Stellschraube des Messerandrückers sitzt. Gegen seitliches Verdrehen ist der Messerandrücker durch Nasen, welche sich gegen das Gestell- oder Tragblech abstützen, abgesichert.

Mit der erfindungsgemäßen Lösung wird ein Schneidwerk geschaffen, welches, neben einem erheblich vereinfachten Aufbau und deshalb mit wesentlich verringerten Herstellungsaufwendungen verbunden ist, eine hohe Betriebssicherheit besitzt. Funktionsstörungen durch Verstopfungen und Unterfütterungen werden mit der Erfindung weitestgehend verhindert.

### Ausführungsbeispiel

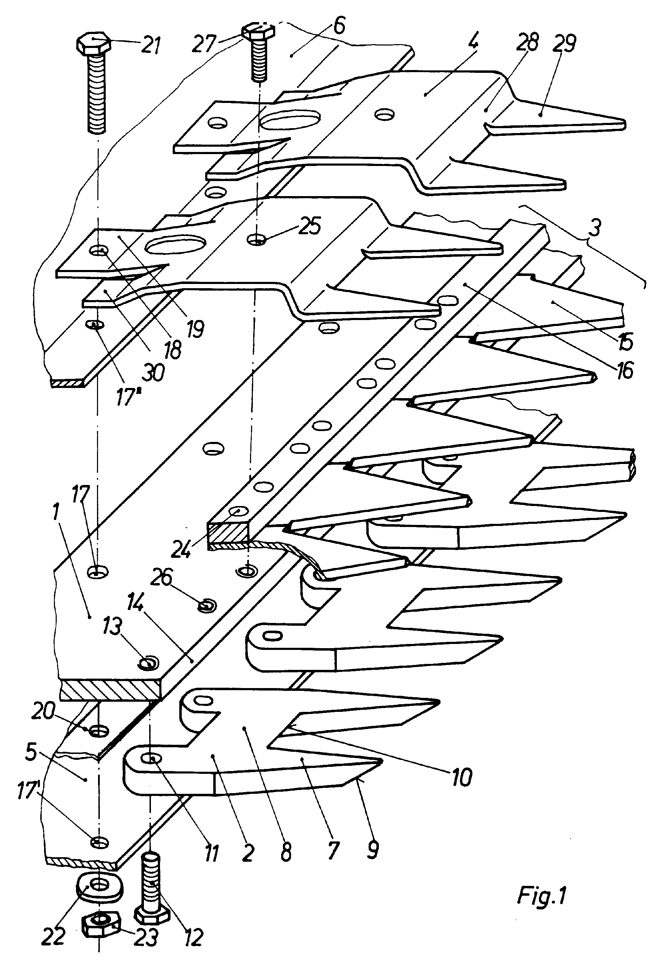

Nachstehend soll die Erfindung an einem Ausführungsbeispiel näher erläutert werden. In den zugehörigen Zeichnungen zeigt
- Fig. 1:: eine perspektivische, auseinandergezogende Darstellung eines Schneidwerkes;

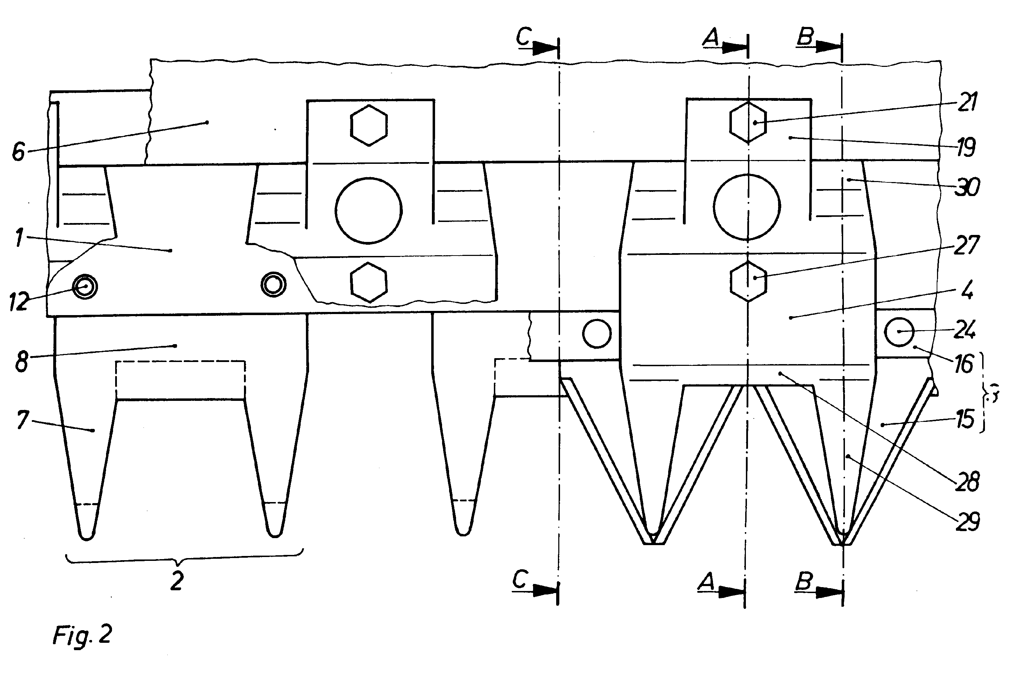

- Fig. 2:: eine Draufsicht auf dieses Schneidwerk;

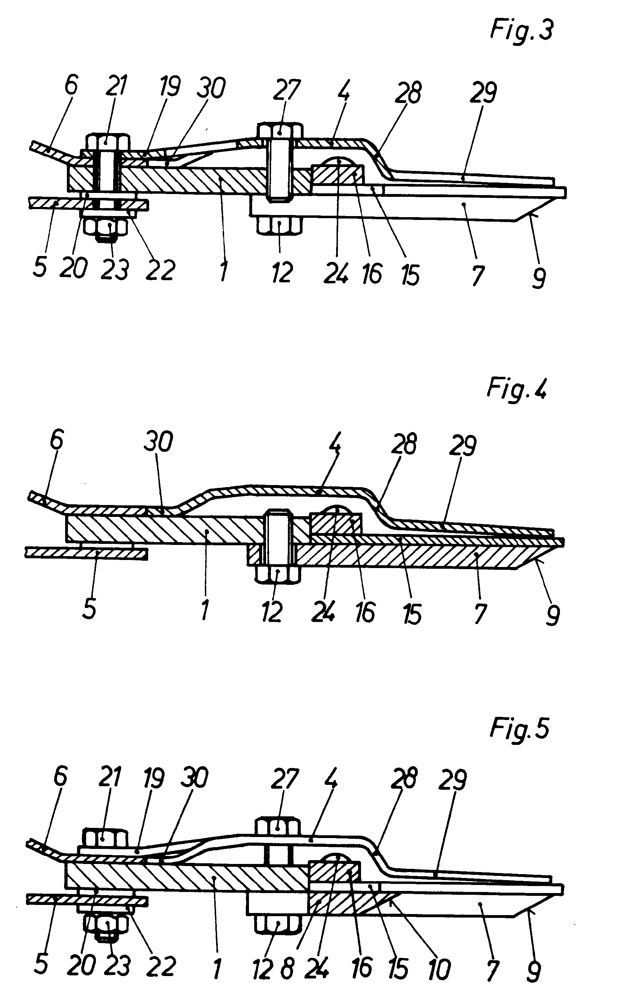

- Fig. 3:: einen Schnitt entlang der Linie A-A nach Fig. 2;
- Fig. 4:: einen Schnitt entlang der Linie B-B nach Fig. 2 und
- Fig. 5:: einen Schnitt entlang der Linie C-C nach Fig. 2.

Ein erfindungsgemäßes Schneidwerk besteht grundsätzlich aus einem sich quer zur Arbeitsrichtung erstreckenden Mähbalken 1, Doppelfingern 2, einem hin- und herbewegten Mähmesser 3 und Messerandrückern 4, wobei der Mähbalken 1 frontseitig am Gestell 5 und am Trogblech 6 einer nicht näher dargestellten Mähmaschine befestigt ist.
Die Doppelfinger 2 besitzen zwei Fingerteile 7, zwischen denen ein Verbindungssteg 8 angeordnet ist, und sind als flache, ebene Blechstanzteile, welche mindestens an den Vorderteilen der Fingerteile 7 einer Wärmebehandlung unterzogen wurden. Die in Arbeitsrichtung liegenden Stirnseiten 9; 10 der Fingerteile 7 und des Verbindungssteges 8 sind dabei entgegen der Arbeitsrichtung nach unten hinten mit einem spitzen Winkel von 30° gezogen. Im rückwärtigen Endbereich der Fingerteile 7 ist jeweils eine Durchgangsbohrung 11 eingebracht, so daß der Doppelfinger 2 von unten mittels Schrauben 12 am Mähbalken 1 in Befestigungsbohrungen 13 montiert ist. Der Verbindungssteg 8 erstreckt sich hierbei an der vorderen Stirnseite 14 des Mähbalkens 1 beginnend nach vorn. Das Mähmesser 3 liegt mit der Unterseite der Messerklingen 15 auf den Fingerteilen 7 bzw. Verbindungssteg 8 eben auf und der Messerrükken 16 befindet sich oberhalb der Messerklingen 15, wobei die rückwärtige Führung des Mähmessers 3 durch die gehärtete vordere Stirnseite 14 des Mähbalkens 1 und die Hinterseiten der Messerklingen 15 und des Messerrückens 16 übernommen wird. Um eine verzugsfreie Herstellung des Messerbalkens zu gewährleisten, ist die hintere Stirnseite des Mähbalkens 1 ebenfalls mit einer Härtezone versehen. Im Zusammenhang mit den Messerklingen 15 ist der Verbindungssteg 8 so weit nach vorn gezogen, daß der Stoß der Schneiden benachbarter Messerklingen 15 hinter der Vorderkante des Verbindungssteges 8 liegt. Die Spitzen der Fingerteile 7 sind gegenüber den Spitzen der Messerklingen 15 um einen kleinen Betrag, beispielsweise ca. 3 mm, zurückgesetzt.
Die Messerandrücker 4 sind ebenfalls doppelfingerförmig ausgebildet, bestehen aus Federstahl und sind am hinteren Ende mit dem hinteren Bereich des Mähbalkens 1 verbunden. Im gewählten Ausführungsbeispiel ist diese Verbindung mit der Befestigung des Mähbalkens 1 am Gestell 5 und am Trogblech 6 kombiniert. Hierzu ist nahe der hinteren Stirnseite des Mähbalkens 1 mittig zu den Befestigungsbohrungen 13 zweier benachbarter Doppelfinger 2 je eine Bohrung 17 angeordnet. Im Gestell 5 und im Trogblech 6 sind entsprechende Bohrungen 17′; 17˝ vorgesehen. Eine weitere Bohrung 18 ist in einer hinteren mittigen Lasche 19 des Messerandrückers 4 eingebracht. Bei der Montage liegt der Mähbalken 1 zwischen dem Gestell 5 und dem Trogblech 6, wobei bei zweiseitigem Messerantrieb zwischen Gestell 5 und Mähbalken 1 eine der Messerklingendicke entsprechende Distanzschiene 20 eingefügt ist. Die Distanzschiene 20 liegt dann auf einer Seite unterhalb des Mähbalkens 1, auf deren anderen Seite oberhalb. Bei einseitigem Messerantrieb, also einem durchgehenden Mähmesser 3, sind die Distanzschienen 20 nicht notwendig. Der Messerandrücker 4 liegt mit der Lasche 19 auf dem Trogblech 6 auf. Verbunden werden die Teile mittels Schraube 21, Unterlegscheibe 22 und Mutter 23. Durch diese Anordnung ist der Messerandrücker 4 um eine Fingerteilung gegenüber dem Doppelfinger 2 versetzt.
Der Messerandrücker 4 ist von der Lasche 19 aus mit einem Freiraum über den Mähbalken 1 und den Messerrücken 16 gezogen, so daß ein Verstellweg in Richtung auf die Messerklingen 15 zu entsteht und die Nietköpfe 24 auf der Oberseite des Messerrückens 16 freien Durchgang besitzen. Mittig im Messerandrücker 4 ist in der Querebene der Befestigungsbohrungen 13 für die Doppelfinger 2 eine Bohrung 25 und im Mähbalken 1 je eine Gewindebohrung 26, welche genau vor der Bohrung 17 liegt, eingebracht. Durch die Bohrung 25 wird von oben eine Stellschraube 27 in die Gewindebohrung 26 geführt, mit welcher der Messerandrücker 4 regulierbar ist. Vor dem Messerrücken 16 besitzt der Messerandrücker 4 einen nach unten und vorn auf die Messerklingen 15 gerichteten, abgewickelten Steg 28 und geht dann in zwei fingerähnliche, zu den Messerklingen 15 fast parallel verlaufende Zungen 29 über, wobei der Abstand der Zungen 29 zueinander der Fingerteilung entspricht. Die Zungen 29 liegen somit über den Fingerteilen 7 des Doppelfingers 2 und besitzen auch die gleiche Länge, wobei die Schneidkanten der Zungen 29 etwas gegenüber den Schneidkanten der Fingerteile 7 zurückversetzt sind. Die Lage der Zunge 29 ist so, daß sie federnd mit ihren Spitzen auf die Messerklingen 15 gedrückt werden. Zwischen beiden Zungen 29 eines Messerandrückers 4 ist der Steg 28 bis zur Unterseite der Zungen 29 geführt, wobei seine Vorderkante spitz ausläuft und etwa im gleichen Abstand vor dem Stoß der Schneiden der Messerklingen 15 wie der Verbindungssteg 8 des Doppelfingers 2 angeordnet ist.
Durch diese Anordnung der Doppelfinger 2 und der Messerandrücker 4 zueinander befindet sich über die gesamte Länge des Mähmessers 3 wechselseitig stets ein Steg 8; 28 unter bzw. über den Messerklingen 15.
Zur genauen Lagefixierung der Messerandrücker 4 sind letztlich zu beiden Seiten der Lasche Nasen 30 nach unten durchgedrückt, deren Hinterkanten an der Vorderkante des Trogbleches 6 anliegen.

### Aufstellung der verwendeten Bezugszeichen

- 1: Mähbalken
- 2: Doppelfinger
- 3: Mähmesser
- 4: Messerandrücker
- 5: Gestell
- 6: Trogblech
- 7: Fingerteil
- 8: Verbindungssteg
- 9; 10: Stirnfläche
- 11: Durchgangsbohrung
- 12: Schraube
- 13: Befestigungsbohrung
- 14: Stirnseite
- 15: Messerklinge
- 16: Messerrücken
- 17; 17′; 17˝: Bohrung
- 18: Bohrung
- 19: Lasche
- 20: Distanzschiene
- 21: Schraube
- 22: Unterlegscheibe
- 23: Mutter
- 24: Nietkopf
- 25: Bohrung
- 26: Gewindebohrung
- 27: Stellschraube
- 28: Steg
- 29: Zunge
- 30: Nase

## Patentansprüche

1. Schneidwerk für landwirtschaftliche Mähmaschinen mit flachen, ebenen Mulchfingern (2), die von unten an einem Mähbalken (1) befestigt sind, einem hin- und hergehenden Mähmesser (3), welches an einem obenliegenden Messerrücken (16) Messerklingen (15) besitzt, wobei die Messerklingen (15) vorn über die Mulchfinger (2) überstehen und der Messerrücken mit seiner Hinterseite an der vorderen Stirnseite (14) eines Mähbalkens (1) anliegt, und einem federnden, am Mähbalken (1) befestigten und über den Messerrücken (16) geführten Messerandrücker (4), dadurch gekennzeichnet, daß
a) die Mulchfinger als Doppelfinger (2) mit einem Verbindungssteg (8) zwischen beiden Fingerteilen (7) ausgebildet sind, wobei die Vorderkante des Verbindungssteges (8) die hintere Begrenzung des Schnittbereiches der Fingerteile (7) bildet;
b) die Messerandrücker (4) doppelfingerförmig ausgebildet sind, wobei die Zungen (29) mit gleicher Teilung symmetrisch über den Fingerteilen (7) liegen und bis annähernd an deren Spitzen reichen;
c) die Doppelfinger (2) und die Messerandrücker (4) um eine Teilung so versetzt zueinander angeordnet sind, daß die Stege (8; 28) von Doppelfinger (2) und Messerandrücker (4) abwechselnd unter und über dem Mähmesser (3) liegen;
d) die Messerandrücker (4) mit den Spitzen der Zungen (29) oder dem vorderen Zungenbereich am Mähmesser (3) anliegen;
e) die Zungen (29) der Messerandrücker (4) schmaler als die Fingerteile (7) sind.

2. Schneidwerk nach Anspruch 1, dadurch gekennzeichnet, daß der Verbindungssteg (8) des Doppelfingers (2) und die Spitzen der Fingerteile (7) an ihren in Arbeitsrichtung gelegenen Stirnseiten (10; 9) in einem spitzen Winkel, insbesondere von ca. 30°, nach unten hinten abgeflacht sind.

3. Schneidwerk nach Anspruch 1, dadurch gekennzeichnet, daß der Messerandrücker (4) von seiner Befestigungsstelle am Mähbalken (1) in bekannter Weise bogenförmig über den Messerrücken (16) geführt ist, so daß zwischen Messerandrücker (4) und Messerrücken (16) ein Freiraum entsteht, vor dem Messerrücken (16) in einem spitzen Winkel zu den Messerklingen (15) verläuft und in Höhe der Messerklingen (15) die Zungen (29) beginnen, wobei die Vorderkante eines Steges (28) zwischen den Zungen (29) spitzwinklig zu der Ebene der Unterseite der Zungen (29) endet.

4. Schneidwerk nach Anspruch 1, dadurch gekennzeichnet, daß die Spitzen der Fingerteile (7) und der Zungen (29) sowie die Vorderkanten der Stege (8; 28) des Doppelfingers (2) und des Messerandrückers (4) in jeweils gleicher Entfernung von der Spitze der Messerklinge (15) angeordnet sind.

5. Schneidwerk nach Anspruch 1, dadurch gekennzeichnet, daß der Verbindungssteg (8) des Doppelfingers (2) unter dem hinteren Teil der Messerklingen (15) liegt.

6. Schneidwerk nach Anspruch 1, dadurch gekennzeichnet, daß der Mähbalken (1) entlang seiner Stirnseiten Härtezonen besitzt.

7. Schneidwerk nach Anspruch 1, dadurch gekennzeichnet, daß der Doppelfinger (2) als Blechstanzteil ausführt ist.

8. Schneidwerk nach Anspruch 1, dadurch gekennzeichnet, daß im Mähbalken (1) nahe und parallel zur vorderen Stirnseite (14) Befestigungsbohrungen (13) für die Doppelfinger (2) vorzugsweise im Abstand der Fingerteilung vorhanden sind, nahe der hinteren Stirnseite mittig zu den Befestigungsbohrungen (13) zweier benachbarter Doppelfinger (2) je eine Bohrung (17) angeordnet ist, wobei mittels Schraubverbindungen (21; 22; 23) durch die Bohrungen (17) der Mähbalken (1) mit einem Gestell (5) des Schneidwerkes und mit einem Trogblech (6) sowie mit den Messerandrückern (4) verbunden ist, und vor jeder Bohrung (17) eine Gewindebohrung (26) vorgesehen ist, in der eine Stellschraube (27) des Messerandrückers (4) sitzt.

## Claims

1. Cutting mechanism for agricultural mowing machines with flat planar mulch fingers (2), which are fastened from below at a mower cutter bar (1), a reciprocating mowing cutter (3), which at an upwardly disposed cutter back (16) has cutter blades (15), wherein the cutter blades (15) project beyond the mulch fingers (2) at the front and the cutter back rests [by its rear side] against the front end face (14) of a mower cutter bar (1), and a resilient blade presser foot (4), which is fastened at the mower cutter bar (1) and guided over the cutter back (16), characterised thereby, that
a) the mulch fingers are constructed as double fingers (2) with a connecting web (8) between both finger parts (7), wherein the front edge of the connecting web (8) forms the rear boundary of the cutting region of the finger parts (7),
b) the blade presser feet (4) are constructed in the shape of double fingers, wherein the tongues (29) lie at the same pitch symmetrically over the finger parts (7) and reach nearly to their tips,
c) the double fingers (2) and the blade presser feet (4) are so arranged one displaced relative to the other by one pitch that the webs (8, 28) of the double fingers (2) and the blade presser feet (4) lie in alternation above and below the mowing cutter (3),
d) the blade presser feet (4) lie by the tips of the tongues (29) or the forward tongue region against the mowing cutter (3) and
e) the tongues (29) of the blade presser feet (4) are narrower than the finger parts (7).

2. Cutting mechanism according to claim 1, characterised thereby, that the connecting web (8) of the double finger (2) and the tips of the finger parts (7) are flattened downwardly to the rear at an acute angle, in particular of about 30°, at their end faces disposed in working direction.

3. Cutting mechanism according to claim 1, characterised thereby, that the blade presser foot (4) is led arcuately across the cutter back (16) in known manner from its fastening point at the mower cutter bar (1) so that a clear space arises between the blade presser foot (4) and the cutter back (16), extends at an acute angle to the cutter blades (15) in front of the cutter back (16) and the tongues (29) begin at the height of the cutter blades (15), wherein the front edge of a web (28) between the tongues 29 ends at an acute angle to the plane of the underside of the tongues (29).

4. Cutting mechanism according to claim 1, characterised thereby, that the tips of the finger parts (7) and the tongues (29) as well as the front edges of the webs (8; 28) of the double finger (2) and the blade presser foot (4) are each arranged at the same respective distance from the cutter blade (15).

5. Cutting mechanism according to claim 1, characterised thereby, that the connecting web (8) of the double finger (2) lies below the rear part of the cutter blade (15).

6. Cutting mechanism according to claim 1, characterised thereby, that the mower cutter bar (1) has hardened zones along its end faces.

7. Cutting mechanism according to claim 1, characterised thereby, that the double finger (2) is executed as punched sheet metal part.

8. Cutting mechanism according to claim 1, characterised thereby, that fastening bores (13) for the double fingers (2) are present, preferably at the spacing of the finger pitch, near and parallelly to the front end face (14) in the mower cutter bar (1) and a respective bore (17) is arranged centrally of the fastening bores (13) of each two adjacent double fingers (2) and near to the rear end face, wherein the mower cutter bar (1) is connected with a frame (5) of the cutting mechanism and with a metal trough plate (6) as well as with the blade presser feet (4) by means of screw connections (21; 22; 23) through the bores (17) and a threaded bore (26), in which an adjusting screw (27) of the blade presser foot (4) sits, is provided in front of each bore (17).

## Revendications

1. Mécanisme de coupe pour des faucheuses agricoles comportant des doigts (2), plans, plats, fixés par en dessous à une poutre de fauche (1), un couteau de fauche (3), à mouvement alternatif, équipé de lames (15) au niveau d'un dos (16) placé au-dessus, les lames (15) dépassant les doigts (2) par l'avant et le dos du couteau s'appliquant par sa face arrière contre la face frontale avant (14) d'une poutre de fauche (1), ainsi qu'un appuis de couteau (4) fixé élastiquement à la poutre de fauche (1) et guidé par le dos (16) du couteau, mécanisme caractérisé en ce que :
a) les doigts sont des paires de doigts (2) avec une entretoise de liaison (8) entre les deux doigts (7), l'arête avant de l'entretoise (8) formant la limite arrière de la zone de coupe des doigts (7),
b) les appuis de couteau (4) sont réalisés en forme de paires de languettes (29) de même pas, réparties symétriquement au-dessus des doigts (7) et arrivant pratiquement jusqu'à la pointe des doigts,
c) les paires de doigts (2) et les appuis de couteau (4) sont décalés d'un pas de façon que les entretoises (8, 28) des paires de doigts (2) et des appuis de couteau (4) se situent alternativement en dessous et au-dessus du couteau de fauche (3),
d) les appuis de couteau (4) s'appliquent par les pointes des languettes (29) ou de la zone avant des languettes contre le couteau de fauche (3),
e) les languettes (29) des appuis de couteau (4) sont plus étroites que les doigts (7).

2. Mécanisme de coupe selon la revendication 1, caractérisé en ce que l'entretoise de liaison (8) des paires de doigts (2) et les pointes des doigts (7) ont des faces frontales (10, 9) faisant un angle aigu notamment environ de 30° vers l'arrière, par rapport à la direction de travail.

3. Mécanisme de coupe selon la revendication 1, caractérisé en ce que l'appuis de couteau (4) passe pardessus le dos (16) du couteau, en faisant un arc, de manière connue, à partir de son point de fixation sur la poutre de fauche (1), pour laisser un intervalle libre entre l'appuis de couteau (4) et le dos (16), et pour arriver suivant un angle aigu sur les lames (15) en avant du dos (16), les languettes commençant au niveau des lames (15), l'arête avant d'une entretoise (28) se terminant entre les languettes (29), suivant un angle aigu par rapport au plan de la face inférieure des languettes (29).

4. Mécanisme de coupe selon la revendication 1, caractérisé en ce que les pointes des doigts (7) et des languettes (29) ainsi que l'arête avant des entretoises (8, 28) de la paire de doigts (2) et de l'appuis de couteau (4) se trouvent chaque fois à la même distance de la pointe des lames (15).

5. Mécanisme de coupe selon la revendication 1, caractérisé en ce que l'entretoise de liaison (8) des paires de doigts (2) se trouve sous la partie arrière des lames de couteau (15).

6. Mécanisme de coupe selon la revendication 1, caractérisé en ce que la poutre de fauche (1) présente une zone durcie au niveau de ses faces frontales.

7. Mécanisme de coupe selon la revendication 1, caractérisé en ce que la paire de doigts (2) est une pièce de tôle estampée.

8. Mécanisme de coupe selon la revendication 1, caractérisé en ce que la poutre de fauche (1) comporte à proximité de la face frontale avant (14), parallèlement à celle-ci, les perçages de fixation (13) pour les paires de doigts (2), de préférence avec un écartement correspondant au pas des doigts, et à proximité des faces arrière, au milieu des perçages de fixation (13) de deux paires de doigts (2), voisines, et chaque fois un perçage (17) et la poutre de fauche (1) est reliée au châssis (5) du mécanisme de coupe et à la tôle (6) ainsi qu'aux appuis de couteau (4) par des liaisons à vis (21, 22, 23) traversant les perçages (17), et en avant de chaque perçage (17) il y a un perçage taraudé (26) recevant une vis de réglage (27) de l'appuis de couteau (4).
